# EUROPÄISCHE PATENTSCHRIFT

(11) **EP 0 968 071 B1**
(45) Veröffentlichungstag und Bekanntmachung des Hinweises auf die Patenterteilung: **19.02.2003**
(21) Anmeldenummer: 98917045.1
(22) Anmeldetag: 21.03.1998
(51) Int. Cl.: B23K 25/00, B23K 9/038, E01B 7/12

(54) **VERFAHREN UND VORRICHTUNG ZUR HERSTELLUNG EINES GLEISOBERBAUTEILS, INSBESONDERE HERZSTÜCKBAUGRUPPE**
METHOD AND DEVICE FOR THE PRODUCTION OF A PERMANENT WAY COMPONENT IN PARTICULAR A CROSS FROG STRUCTURAL COMPONENT
PROCEDE ET DISPOSITIF DE PRODUCTION D'UNE PIECE DE SUPERSTRUCTURE DE VOIE, EN PARTICULIER D'UN ELEMENT DE COEUR DE CROISEMENT

(30) Priorität: 21.03.1997 DE 19712024
(43) Veröffentlichungstag der Anmeldung: 05.01.2000
(73) Patentinhaber: BWG GmbH & Co. KG, 35510 Butzbach (DE); VAE Aktiengesellschaft, 1010 Wien (AT)
(72) Erfinder: KUNITZ, Walter, D-15745 Wildau (DE); HÖHNE, Hubertus, D-35510 Butzbach (DE); RATZ, Gerhard, D-35428 Langgöns (DE)
(74) Vertreter: Stoffregen, Hans-Herbert, Dr. Dipl.-Phys.
(86) Internationale Anmeldenummer: EP9801665
(87) Internationale Veröffentlichungsnummer: WO98042473

(56) Entgegenhaltungen:
- DE-C- 930 149
- GB-A- 2 099 051
- US-A- 3 671 712
- US-A- 4 429 207

## Beschreibung

Die Erfindung bezieht sich auf ein Verfahren und eine Vorrichtung gemäß Anspruch 1 bzw. 18. Aus dem Dokument GB-A-2 099 051 ist ein Verfahren zum Elektroschlachenschweißen von Schienenteilen bekannt.

Schienen können zum Beispiel durch Elektronenstrahlschweißen oder Thermitschmelzschweißen, durch Abbrennstumpfschweißen oder Thermitpressschweißen miteinander verbunden werden. Entsprechende Schweißverfahren sind häufig sehr aufwendig und damit kostenträchtig. Auch können unerwünschte Gefügeänderungen auftreten, durch die die mechanischen Eigenschaften negativ beeinflusst werden. Insbesondere in Hochgeschwindigkeitsstrecken des Gleisoberbaus ist jedoch darauf zu achten, dass die Gefüge im Bereich von Schweißnähten Materialeigenschaften im vorgegebenen Toleranzbereich aufweisen.

Beim Schweißen selbst können die zu verbindenden Gleisteile von einer mehrteiligen Formbacke aufgenommen werden, die gegebenenfalls Einlagen aus keramischem Material aufweisen (DE-B 1 145 654, DE 38 32 156 A1, DE-U 77 06 807, DE 93 05 182 U1).

Der vorliegenden Erfindung liegt das Problem zugrunde, ein Verfahren und eine Vorrichtung der eingangs genannten Art so weiterzubilden, dass mit konstruktiv einfachen Maßnahmen ein wirtschaftliches Verschweißen von Schienenabschnitten, insbesondere Herzstückbaugruppen bzw. -teilen möglich ist, wobei definierte Materialeigenschaften beim Fertigen des Gleisoberbauteils vorliegen, also im Vergleich zu bekannten Verfahren eine Qualitätsverbesserung erzielbar ist.

Erfindungsgemäß wird das Problem durch die Merkmale des Anspruchs 1 bzw. 18 gelöst.

Um Schweißungen gewünschter Güte zu erzielen, sieht eine Weiterbildung der Erfindung vor, dass zwischen dem Füllmaterial und der kopfseitigen Kühlplatte vorhandenem Schweiß-Badraum zwei stromführende Draht- oder Bandelektroden und zwischen dem Füllmaterial und der fußseitigen Kühlplatte vorhandenem Badraum eine stromführende Drahtelektrode endlos zugeführt werden. Hierdurch erfolgt jedoch keine Beschränkung. Vielmehr kann auch eine andere Anzahl von Elektroden zum Einsatz gelangen.

Bei dem Füllstoff handelt es sich vorzugsweise um einen Keramikkörper einer Außengeometrie, der an die des zwischen den zu verschweißenden Raums wie Stegkammerraums angepasst ist. Auch kann als Füllstoff bzw. -körper gekühltes Kupfer oder Stahlmaterial benutzt werden.

Um besonders gute Schweißergebnisse zu erzielen, ist vorgesehen, dass die Schienenabschnitte bei einer Vorwärmung von 300° C bis 500° C, vorzugsweise im Bereich von 400° C und 450° C verschweißt werden.

Zum Verschweißen sollte die Schweißleistung vorzugsweise auf in etwa 10 bis 15 kg/h, vorzugsweise 11 bis 13 kg/h Drahtelektrodenmaterial eingestellt werden.

Vorzugsweise wird die Drahtelektrode durch einen rohrförmigen Isolierkörper, der aus Schlackepulver gepresst wird, geführt, wobei die Drahtelektrode selbst von einem elektrisch leitenden Führungsrohr aufgenommen ist.

Alternativ besteht die Möglichkeit als Drahtelektrode einen aus Stahlmaterial bestehenden Hohlzylinder zu verwenden, der mit Schlackematerial gefüllt ist, so dass ein Nachfüllen von Schlackepulver nicht oder nur in geringem Umfang erforderlich ist.

Unabhängig davon wird als Drahtelektrodematerial solches benutzt, das dem zu verschweißenden Material angepasst ist.

Besonders gut reproduzierbare Schweißergebnisse bei hohem Durchsatz werden dann erzielt, wenn zum Verschweißen der Schienenabschnitte der die jeweilige Drahtelektrode durchfließende Strom auf in etwa 300 bis 1.200 A, vorzugsweise 500 bis 800 A eingestellt wird.

Um definierte Bedingungen über die gesamte Länge der Schweißnaht zu erzielen, ist vorgesehen, dass nach Ausbildung der Schweißnaht ein bodenseitiger Abschnitt des Gleisoberbauteils abgeschnitten wird. Unter bodenseitigem Abschnitt wird derjenige verstanden, der zunächst verschweißt wird.

Durch die erfindungsgemäße Lehre ergeben sich geschweißte Schienenabschnitte mit hoher Zähigkeit, wobei mechanische Eigenschaften gegeben sind, die insbesondere auch einen Einsatz in Hochgeschwindigkeitsstrecken im Gleisoberbau ermöglichen.

Ferner zeichnet sich eine Vorrichtung zum Verschweißen zweier langgestreckter Werkstücke in zueinander beabstandet verlaufenden flächigen Bereichen, insbesondere zum Verschweißen von Schienenabschnitten, deren Schienenköpfe und -füße zum Verschweißen zueinander ausgerichtet sind, dadurch aus, dass die für Elektroschlacke-Schweißen bestimmte Vorrichtung eine Halterung zum Befestigen der Werkstücke umfasst, dass die Halterung von einer Montierposition zum Befestigen der Werkstücke in eine vertikale oder im Wesentlichen vertikal verlaufende Schweißposition verschwenkbar ist, dass entlang der Halterung zu beiden Seiten der Werkstücke in deren zu verschweißenden Bereichen Führungen für außenseitig an die Werkstücke anlegbare und entlang dieser verfahrbare Kühlkörper angeordnet sind und dass zu beiden Seiten der Werkstücke Aufnahmen von Drahtelektroden angeordnet sind, die im Schweißbereich parallel oder in etwa parallel zu den zu verschweißenden Flächen ausgerichtet sind. Dabei können die Führungen für die Kühlkörper und/oder Aufnahmen für die Drahtelektroden von weiteren Halterungen ausgehen.

Insbesondere sollte eine der weiteren Halterungen eine Einheit mit der die Werkstücke fixierenden Halterung wie Aufnahmetisch bilden.

Die Aufnahme für die Drahtelektroden kann ein Wickel sein. Ferner ist vorgesehen, dass von den weiteren Halterungen Zuführungseinrichtungen für Schweißpulver wie Schlackepulver ausgehen. Insbesondere sollte die Zuführungseinrichtung mit der Aufnahme für die Drahtelektrode eine Einheit bilden.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: einen Schnitt durch zu verschweißende Schienenabschnitte und
- Fig. 2: eine Prinzipdarstellung einer Vorrichtung zum Verschweißen insbesondere von Schienenabschnitten.

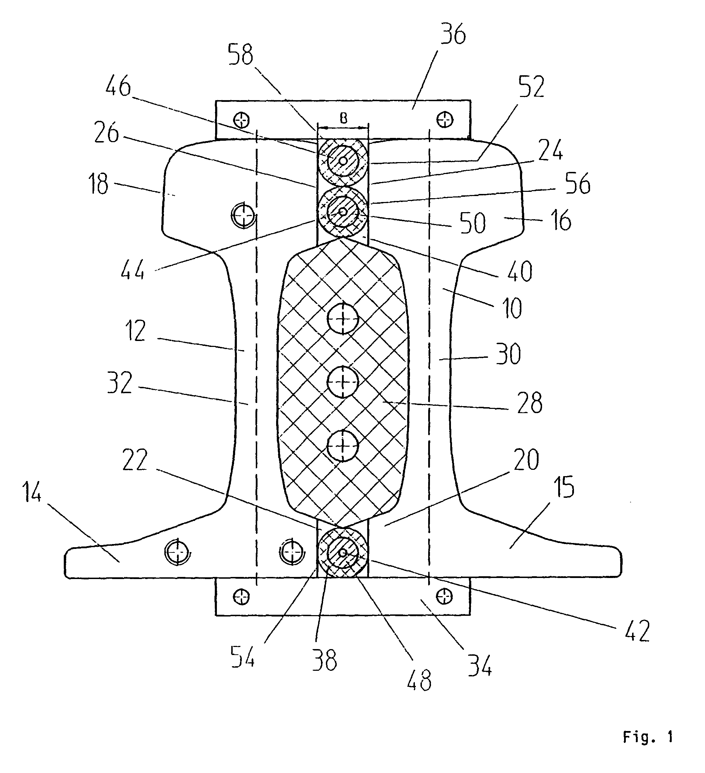

In der Fig. 1 ist ein Querschnitt durch zwei miteinander zu verschweißende Schienenabschnitte 10, 12 dargestellt, die auf einer nicht dargestellten elektrisch leitenden Grundfläche vertikal verlaufend angeordnet sind. Ohne die Erfindung einzuschränken, umfasst jeder Schienenabschnitt 10, 12 einen Schienenfuß 14, 15 sowie einen Schienenkopf 16, 18, die in ihren einander zugewandten Flächen 20, 22 bzw. 24, 26 zueinander parallel oder in etwa parallel oder sogar konisch verlaufen. Letzteres bedeutet, dass ihr Abstand von einem Ende der zu verschweißenden Fläche zum anderen Ende hin zunimmt. Der Neigungswinkel der Flächen zueinander kann zwischen 6° und 15° liegen. Der Abstand B zwischen den einander zugewandten Flächen 20, 22 der Schienenfüße 14 und 15 bzw. der Flächen 24 und 26 der Schienenköpfe 16 und 18 beträgt zum Beispiel 10 bis 50 mm, vorzugsweise in etwa 20 bis 30 mm.

Der Raum außerhalb der einander zugewandten Flächen 20, 22 und 24, 26, der als Stegkammerraum 28 bezeichnet wird, ist im Ausführungsbeispiel durch einen Keramikkörper ausgefüllt, dessen Außengeometrie der des von den Stegen 30, 32 der Schienenabschnitte 10 und 12 begrenzten Zwischenraums entspricht.

Außenseitig entlang der Schienenfüße 14, 15 bzw. Schienenköpfe 16, 18 verlaufen vorzugsweise aus Kupfer bestehende Kühlplatten 34, 36, so dass sich jeweils ein Raum 38 zwischen der fußseitigen Kühlplatte 34 und dem Keramikkörper 28 und ein Raum 40 zwischen dem Keramikkörper 28 und der kopfseitigen Kühlplatte 36 ausbildet. Die Kühlplatten 34, 36 sind entlang der Schienenabschnitte 10, 12 entsprechend des Schweißablaufs verschiebbar.

Um die Schienenabschnitte 10, 12 im Bereich ihrer Schienenfüße 14, 15 bzw. -köpfe 16, 18 miteinander zu verschweißen, wird das an und für sich bekannte Elektroschlackeschweißen eingesetzt, welches für das Verschweißen von in einer Ebene ausgerichteten und in dieser zu verschweißenden Platten bekannt ist.

Erfindungsgemäß werden in die zuvor beschriebenen Badräume 38, 40 zu Beginn des Schweißvorgangs Endlos-Drahtelektroden 42, 44, 46 bis zur elektrisch leitenden Abstützplatte der Schienenabschnitte 10, 12 hin eingeführt, und zwar in den fußseitigen Raum 38 eine (1) Drahtelektrode 42 und in den kopfseitigen Raum 40 zwei Drahtelektroden 44, 46. Jede Drahtelektrode 42, 44, 46 ist von einem elektrisch leitenden Führungsrohr 48, 50, 52 umgeben, welches seinerseits von einem aus elektrisch isolierendem Material bestehenden Rohr 54, 56 und 58 umgeben ist, welches vorzugsweise gepresstes Schlackematerial ist.

Alternativ kann jede Drahtelektrode aus einem dem Material der zu verschweißenden Schienenabschnitte 10, 12 entsprechenden zylinderischen Hohlkörper bestehen, der mit Schlackepulver gefüllt ist, so dass ein Nachfüllen von Schweißpulver in die zwischen den Kühlplatten 34 und 36 und dem Füllkörper 28 vorhandenen Räume 38, 40 nicht oder nur wenig erforderlich ist.

Auch ist darauf hinzuweisen, dass es nicht zwingend erforderlich ist, dass in dem kopfseitigen Raum 40 zwei Elektroden 44, 44 und dem fußseitigen Raum 38 eine Drahtelektrode 42 geführt wird. Vielmehr kann entsprechend der zu verschweißenden Bereiche auch eine hiervon abweichende Anzahl von Drahtelektroden zum Einsatz gelangen.

Des Weiteren ist darauf hinzuweisen, dass die Drahtelektroden 42, 44, 46 überaus gerade ausgerichtet und parallel zur Längsrichtung der Räume 38, 40 in diese eingebracht und geführt werden, um zu den gewünschten reproduzierbaren guten Schweißergebnissen zu gelangen. Hierzu ist es erforderlich, dass die Drahtelektroden 42, 44, 46 stets einen gleichbleibenden Abstand zu den verschweißenden Flächen 20, 22, 24, 26. aufweisen.

Um das Verschweißen durchzuführen, erfolgt ein Erwärmen der einander zugewandten Flächen 20, 22 bzw. 24, 26 durch ein elektrisch leitendes Schlackebad, in das die Drahtelektroden 42, 44, 46 eingeführt werden. Die Temperatur des Schlackebades reicht dabei aus, um die Drahtelektrode und den Grundwerkstoff der Schienenabschnitte 10, 12 anzuschmelzen, wodurch unter der Schlacke ein Schmelzbad entsteht, das beim Erstarren die jeweilige Schweißnaht bildet. Die Schmelzenergie selbst entsteht durch Widerstandserwärmung über die Drahtelektroden 42, 44, 46. Da das Schlackebad gegenüber den Drahtelektroden 42, 44, 46 einen wesentlich größeren Querschnitt und eine kürzere Länge besitzt, wird in dem Schlackebad hauptsächlich die zugeführte Stromenergie in Wärme umgesetzt. Vorzugsweise fließt durch jede Drahtelektrode 42, 44, 46 ein Strom von in etwa 300 bis 1.200 A, insbesondere im Bereich zwischen 500 und 800 A.

Um optimale Schweißergebnisse zu erzielen, sollten die Schienenabschnitte 10, 12 vorgewärmt sein. Temperaturen im Bereich zwischen 300° C und 500° C sind bevorzugt.

Die Leistung des Verschweißens sollte dabei derart eingestellt werden, dass pro Stunde in etwa 10 kg bis 12 kg Drahtelektrodenmaterial geschmolzen wird.

Nach Ausbilden der durch Elektroschlackeschweißen ausgebildeten Schweißnähte zwischen den Schienenabschnitten 10 und 12, also zwischen den Flächen 20, 22 und 24, 26 sollte ein bodenseitiger Bereich in der Länge von zum Beispiel 10 bis 30 mm, vorzugsweise im Bereich von 20 mm abgetrennt sein, um etwaige aufgetretene Schweißfehler zu eliminieren. Am Schweißnahtende sollte die Naht mechanisch ausgerundet werden.

Um im Bereich der Schweißnaht und in dieser selbst aufgetretene Entmischungen zu heilen bzw. eine vorliegende Gußstruktur zu beseitigen, werden die verschweißten Schienenabschnitte 10, 12 vergütet bzw. normalisiert.

Für das Material der Schienenabschnitte 10, 12, die verschweißt werden, kommen z. B. Stahl 900 A und Bainit in Frage.

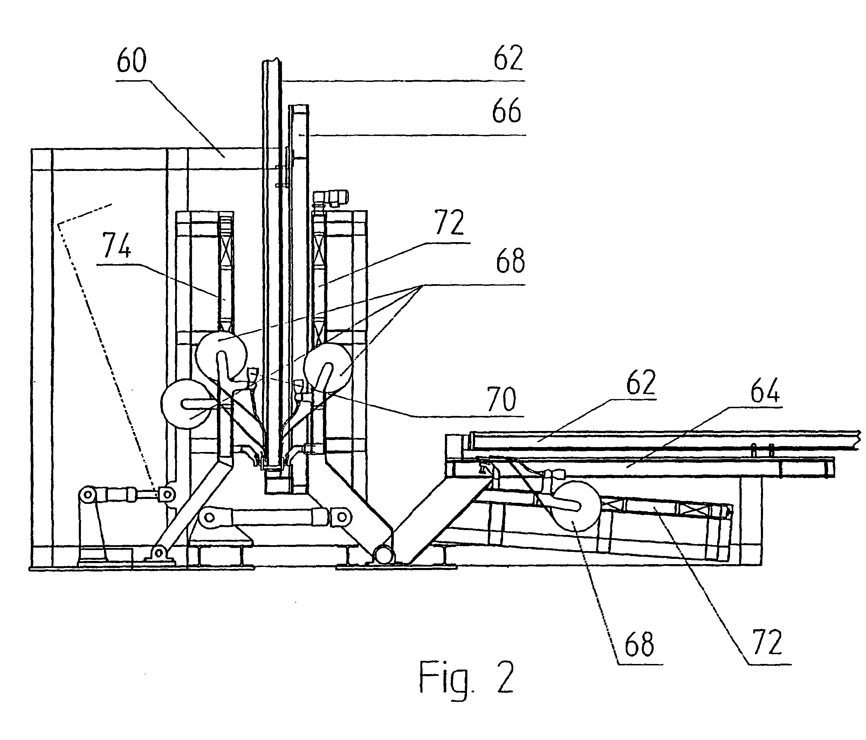

In Fig. 2 ist eine Prinzipdarstellung einer Vorrichtung 60 dargestellt, mit der zwei stabförmige Metallteile, insbesondere Schienenabschnitte z. B. aus dem Materialstahl 900 A mittels Elektroschlacke-Schweißens verbunden werden soll. Dabei werden bei der Erläuterung der Fig. 2 grundsätzlich die Elemente und deren Bezugszeichen verwendet, die im Zusammenhang mit der Fig. 1 benutzt worden sind.

Die Vorrichtung umfasst einen Aufnahmetisch 64, auf dem die zu verschweißenden Werkstücke 62 zueinander ausgerichtet und fixiert werden, wobei die zu verschweißenden Flächen 20, 22, 24, 26 zueinander parallel oder konisch zueinander verlaufen. Die Abstandserweiterung erfolgt dabei vom unteren Bereich der Werkstücke 62 bezogen auf ihre vertikale Position beim Verschweißen zum oberen Ende hin. Der Winkel, den die einander zugewandten und zu verschweißenden Flächen zueinander beschreiben können, kann im Bereich zwischen vorzugsweise 6 und 15° liegen.

In horizontaler Ausrichtung des Aufnahmetisches 62 und der Position der Werkstücke 62 wird - entsprechend der Fig. 1 - zwischen den zu verschweißenden Bereichen ein Formstück - ensprechend dem Formstück 28 - eingebracht. Der Aufnahmetisch 64 wird anschließend in seine vertikale Position (kennzeichnet durch das Bezugszeichen 66) verschwenkt, um sodann außenseitig entlang der zu verschweißenden Flächen der Werkstücke 62 entsprechend der Fig. 1 Kühlplatten 34, 36 anzuordnen, die entsprechend des Schweißfortlaufes entlang der Werkstücke 62 vom Bodenbereich zum Ende des Schweißbereichs hin verfahren werden. Gleichzeitig werden in den von dem Formstück 28 den äußeren Kühlplatten 34, 36 und den zu verschweißenden Flächen 20, 22 bzw. 24, 26 in der Numerierung der Fig. 1 Schweißdrähte 42, 44, 46 von Rollen 68 abgewickelt, wobei die in den zuvor beschriebenen Räumen hineinragenden Enden der Schweißdrähte derart geradegebogen und zu den zu verschweißenden Flächen 20, 22, 24, 26 ausgerichtet sind, dass der gewünschte erforderliche gleichbleibende Abstand zu den Flächen 20, 22, 24, 26 während des Verschweißens sichergestellt ist, wodurch die gewünschte Güte des Schweißergebnisses erzielbar ist. Jedem Raum 38, 40, innerhalb der die Schweißdrähte bzw. Drahtelektroden 42, 44, 46 verlaufen, ist eine Zuführeinrichtung 70 für Schweißpulver zugeordnet, wie rein prinzipiell der Fig. 2 zu entnehmen ist. Dabei sind die Schweißpulverdosiervorrichtungen 70 mit den Rollen 68 so verbunden, dass diese zusammen mit den Rollen 68 entlang der zu verschweißenden Werkstücke 62 verfahrbar sind. Die Schweißrollen 68 werden dabei von nicht näher dargestellten Schlitten aufgenommen, die parallel zu dem Aufnahmetisch 66, also parallel zu den zu verschweißenden Werkstücken 62 entlang dieser auf Führungen 72, 74 verfahrbar sind. Dabei ist eine der Führungen 72 als Einheit mit dem Aufnahmetisch 62 verbunden, aber vorzugsweise getrennt schwenkbar.

Mit der erfindungsgemäßen Vorrichtung 60 lassen sich Schienenabschnitte durch Elektroschlacke-Schweißen in besserer Qualität bei größerer Schweißleistung im Vergleich zu üblichen Verbindungstechniken verschweißen.

Mit dem erfindungsgemäßen Verfahren können problemlos Werkstücke über Längen zwischen 15 und 200 cm verschweißt werden.

## Patentansprüche

1. Verfahren zur Herstellung eines Gleisoberbauteils, insbesondere Herzstückbaugruppe, umfassend einen ersten und einen zweiten Schienenabschnitt (10,12), die im jeweiligen Schienenkopfund -fußbereich durch Elektroschlackeschweißen verschweißt werden, wobei die Schienenabschnitte in Bezug auf ihre Längsachsen vertikal oder im Wesentlichen vertikal und die Schienenfüße und Schienenköpfe beabstandet zueinander angeordnet werden, zwischen den Schienenköpfen und -füßen vorhandener Stegkammerraum (28) mit Füllstoff ausgefüllt wird, außenseitig entlang der Schienenköpfe und der Schienenfüße Kühlplatten (34,36) angeordnet werden und in jeweils zwischen zu verschweißenden Flächen, Kühlplatte und Füllstoff gebildetem Raum jeweils zumindest eine an eine Spannungsquelle angeschlossene Elektrode eingeführt wird.

2. Verfahren nach Anspruch 1,
**dadurch gekennzeichnet,**
**dass** die zumindest eine Elektrode derart eingeführt wird, dass während des Schweißens deren Abstand zu den zu verschweißenden Flächen gleich oder weitgehend gleich bleibt.

3. Verfahren nach Anspruch 2,
**dadurch gekennzeichnet,**
**dass** als Füllstoff ein Keramikkörper mit einer Außengeometrie verwendet wird, die an die des Stegkammerraums angepasst wird.

4. Verfahren nach Anspruch 2,
**dadurch gekennzeichnet,**
**dass** als Badbegrenzung gekühlte Kupferplatten verwendet werden.

5. Verfahren nach einem der vorhergehenden Ansprüche,
**dadurch gekennzeichnet,**
**dass** die Schienenabschnitte bei einer Vorwärmung von in etwa 300° C bis 500° C, vorzugsweise im Bereich von 400° C verschweißt werden.

6. Verfahren nach einem der vorhergehenden Ansprüche,
**dadurch gekennzeichnet,**
**dass** zwischen dem Füllmaterial und der kopfseitigen Kühlplatte zumindest eine, vorzugsweise zwei oder mehrere Elektroden wie Draht- oder Bandelektroden und im Bereich zwischen dem Füllmaterial und der fußseitigen Kühlplatte zumindest eine stromführende Elektrode wie Draht- oder Bandelektrode oder umgekehrt zugeführt werden.

7. Verfahren nach einem der vorhergehenden Ansprüche,
**dadurch gekennzeichnet,**
**dass** zum Verschweißen der Schienenabschnitte eine Schweißleistung von in etwa 10 bis 15 kg/h, vorzugsweise 11 bis 13 kg/h Drahtelektrodenmaterial eingestellt wird.

8. Verfahren nach einem der vorhergehenden Ansprüche,
**dadurch gekennzeichnet,**
**dass** die von einem elektrisch leitenden Führungskörper umgebende Drahtelektrode von einem rohrförmigen Isolierkörper umschlossen wird, der aus Schlackepulver gepresst wird.

9. Verfahren nach einem der vorhergehenden Ansprüche,
**dadurch gekennzeichnet,**
**dass** die einander zugewandten und zu verschweißenden Flächen der Schienenfüße bzw. Schienenköpfe in einem Abstand B zueinander angeordnet werden, wobei 10 mm > B > 50 mm, vorzugsweise B in etwa 20 bis 30 mm beträgt.

10. Verfahren nach einem der vorhergehenden Ansprüche,
**dadurch gekennzeichnet,**
**dass** als Drahtelektrode ein zylinderischer Hohlkörper als elektrischer Leiter benutzt wird, der mit Schlackepulver gefüllt ist.

11. Verfahren nach einem der vorhergehenden Ansprüche,
**dadurch gekennzeichnet,**
**dass** die Schienenfüße bzw. die Schienenköpfe derart ausgerichtet werden, dass die zu verschweißenden Flächen parallel oder in etwa parallel zueinander verlaufen.

12. Verfahren nach einem der vorhergehenden Ansprüche,
**dadurch gekennzeichnet,**
**dass** die Schienenfüße bzw. die Schienenköpfe derart zueinander ausgerichtet werden, dass die zueinander zu verschweißenden Flächen einen Winkel α einschließen, wobei insbesondere 2° ≤ α ≤ 15° ist.

13. Verfahren nach einem der vorhergehenden Ansprüche,
**dadurch gekennzeichnet,**
**dass** zum Verschweißen der Schienenabschnitte der die jeweilige Drahtelektrode durchfließende Strom in etwa auf 300 bis 1.200 A, vorzugsweise 400 bis 600 A eingestellt wird.

14. Verfahren nach einem der vorhergehenden Ansprüche,
**dadurch gekennzeichnet,**
**dass** nach Ausbildung der Schweißnähte bodenseitige Schweißnähte in einem Abstand zum freien Ende des Gleisoberbauteils von in etwa 10 bis 30 mm, vorzugsweise 20 mm entfernt werden.

15. Verfahren nach einem der vorhergehenden Ansprüche,
**dadurch gekennzeichnet,**
**dass** am Schweißnahtende die Schweißnaht mechanisch ausgerundet wird.

16. Verfahren nach einem der vorhergehenden Ansprüche,
**dadurch gekennzeichnet,**
**dass** das Gleisoberbauteil nach Ausbildung der Schweißnähte wärmebehandelt wird.

17. Verfahren nach einem der vorhergehenden Ansprüche,
**dadurch gekennzeichnet,**
**dass** bei der Wärmebehandlung das in dem Stegkammerraum vorhandene Füllmaterial verbleibt.

18. Vorrichtung zum Verschweißen zweier langgestreckter Werkstücke (10, 12) in zueinander beabstandet verlaufenden flächigen Bereichen (20, 22, 24, 26), insbesondere zum Verschweißen von Schienenabschnitten, deren Schienenköpfe und -füße zum Verschweißen zueinander ausgerichtet sind,
**dadurch gekennzeichnet,**
**dass** die für Elektroschlacke-Schweißen bestimmte Vorrichtung (60) eine Halterung (64) zum Befestigen der Werkstücke (10, 12, 62) umfasst, dass die Halterung von einer Montierposition zum Befestigen der Werkstücke in eine vertikale oder im Wesentlichen vertikal verlaufende Schweißposition verschwenkbar ist, dass entlang der Halterung zu beiden Seiten der Werkstücke in deren zu verschweißenden Bereichen (20, 22, 24, 26) Führungen für außenseitig an die Werkstücke anlegbare und entlang dieser verfahrbare Kühlkörper angeordnet sind und dass zu beiden Seiten der Werkstücke Aufnahmen von Elektroden angeordnet sind, die im Schweißbereich parallel oder in etwa parallel zu den zu verschweißenden Flächen ausgerichtet sind.

19. Vorrichtung nach Anspruch 18,
**dadurch gekennzeichnet,**
**dass** die Führungen (72, 74) für die Kühlkörper (34, 36) und/oder Aufnahmen (68) für die Elektroden wie Draht- oder Bandelektroden (48, 50, 52) von weiteren Halterungen ausgehen.

20. Vorrichtung nach Anspruch 18,
**dadurch gekennzeichnet,**
**dass** eine der weiteren Halterungen (72) eine Einheit mit der die Werkstücke (10, 12, 62) fixierenden Halterung (64) wie Aufnahmetisch bildet.

21. Vorrichtung nach Anspruch 18,
**dadurch gekennzeichnet,**
**dass** die Aufnahmen (68) für die Elektroden (48, 50, 52) Wickel sind.

22. Vorrichtung nach Anspruch 18,
**dadurch gekennzeichnet,**
**dass** von den weiteren Halterungen (72, 74) Zuführungseinrichtungen (70) für Schweißpulver wie Schlackepulver ausgehen.

23. Vorrichtung nach Anspruch 18,
**dadurch gekennzeichnet,**
**dass** die Zuführungseinrichtung (70) mit der Aufnahme (68) für die Elektrode (48, 50, 52) eine Einheit bildet.

## Claims

1. Method for producing a track superstructure part, in particular a cross frog structural component, comprising a first and a second rail portion (10, 12), being welded by electroslag welding in the respective rail head and foot region, wherein the rail portions are arranged vertically or substantially vertically with respect to their longitudinal axes and the rail feet and rail heads are arranged spaced from one another, the web chamber (28) between the rail heads and feet is filled with filler, cooling plates (34, 36) are arranged on the outside along the rail heads and rail feet and at least one respective electrode connected to a voltage source is introduced into the respective space formed between the faces to be welded, cooling plate and filler.

2. Method according to claim 1, **characterised in that** the at least one electrode is introduced in such a way that, during welding, the spacing thereof from the faces to be welded remains identical or substantially identical.

3. Method according to claim 1, **characterised in that** a ceramic body with an outer geometry adapted to that of the web chamber is used as filler.

4. Method according to claim 2, **characterised in that** cooled copper plates are used as bath limitation.

5. Method according to any one of the preceding claims, **characterised in that** the rail portions are welded at a preheating temperature of about 300°C to 500°C, preferably in the region of 400°C.

6. Method according to any one of the preceding claims, **characterised in that** at least one, preferably two or more electrodes such as wire or tape electrodes are fed between the filler and the head-side cooling plate and at least one current-carrying electrode such as a wire or tape electrode is fed between the filler and the foot-side cooling plate, or vice versa.

7. Method according to any one of the preceding claims, **characterised in that** a welding power of about 15 kg/h, preferably 11 to 13 kg/h, wire electrode material is adjusted for welding the rail portions.

8. Method according to any one of the preceding claims, **characterised in that** the wire electrode surrounded by an electrically conductive guide body is enclosed by a tubular insulating body pressed from slag powder.

9. Method according to any one of the preceding claims, **characterised in that** the faces of the rail feet or rail heads which face each other and are to be welded are arranged at a spacing B from one another, wherein 10 mm > B > 50 mm, B is preferably about 20 to 30 mm.

10. Method according to any one of the preceding claims, **characterised in that**, as a wire electrode, a cylindrical hollow body is used as an electrical conductor and is filled with slag powder.

11. Method according to any one of the preceding claims, **characterised in that** the rail feet or the rail heads are aligned in such a way that the faces to be welded extend parallel or approximately parallel to one another.

12. Method according to any one of the preceding claims, **characterised in that** the rail feet or the rail heads are aligned with respect to one another in such a way that the faces to be welded to one another enclose an angle α, wherein in particular 2° ≤ α ≤ 15°.

13. Method according to any one of the preceding claims, **characterised in that** for welding the rail portions, the current flowing through the respective wire electrode is adjusted to about 300 to 1,200 A, preferably 400 to 600 A.

14. Method according to any one of the preceding claims, **characterised in that** after formation of the weld seams, bottom-side weld seams are removed at a spacing of about 10 to 30 mm, preferably 20 mm, from the free end of the track superstructure.

15. Method according to any one of the preceding claims, **characterised in that** the weld seam is mechanically rounded at the weld seam end.

16. Method according to any one of the preceding claims, **characterised in that** the track superstructure is heat-treated after formation of the weld seams.

17. Method according to any one of the preceding claims, **characterised in that** during the heat treatment the filler present in the web chamber remains.

18. Device for welding two elongate workpieces (10, 12) in mutually spaced flat regions (20, 22, 24, 26), in particular for welding rail portions, the rail heads and feet of which are aligned with respect to one another for welding, **characterised in that** the device (60) intended for electroslag welding comprises a holding device (64) for fastening the workpieces (10, 12, 62), **in that** the holding device can be pivoted from an assembly position for fastening the workpieces into a vertical or a substantially vertically extending welding position, **in that** along the holding device on either side of the workpieces in the regions (20, 22, 24, 26) thereof to be welded, guides are arranged for cooling bodies which can be placed externally on the workpieces and can be moved along them, and **in that** on either side of the workpieces receivers of electrodes are arranged, being aligned in the welding region parallel or approximately parallel to the faces to be welded.

19. Device according to claim 18, **characterised in that** the guides (72, 74) for the cooling bodies (34, 36) and/or receivers (68) for the electrodes such as wire or tape electrodes (48, 50, 52) extend from further holding devices.

20. Device according to claim 18, **characterised in that** one of the further holding devices (72) forms a unit with the holding device (64) fixing the workpieces (10, 12, 62).

21. Device according to claim 18, **characterised in that** receivers (68) for the electrodes (48, 50, 52), are windings.

22. Device according to claim 18, **characterised in that** feed apparatuses (70) for welding powder such as slag powder extend from the further holding devices (72, 74).

23. Device according to claim 18, **characterised in that** the feed apparatus (70) forms a unit with the receiver (68) for the electrode (48, 50, 52).

## Revendications

1. Procédé de fabrication d'une pièce de superstructure de voie, en particulier d'un élément de coeur de croisement, dans lequel :
- une première et une seconde section de rail (10, 12) sont soudées électriquement sous laitier à la fois par leurs zones de tête et leur zones de pied, ces sections ayant leurs axes longitudinaux verticaux ou sensiblement verticaux, et leurs zones de tête et leurs zones de pied respectivement espacées,
- la chambre médiane (28) située entre les zones de tête et les zones de pied est garnie d'un matériau de remplissage,
- des plaques de refroidissement (34, 36) sont montées à l'extérieur, le long des têtes de rail et des pieds de rail,
- une électrode raccordée à une source de tension est introduite dans l'espace délimité par les surfaces à souder, la plaque de refroidissement et le matériau de remplissage.

2. Procédé selon la revendication 1,
**caractérisé en ce qu'**
au moins une électrode est introduite de manière que pendant le soudage, elle reste à une distance constante ou sensiblement constante des surfaces à souder.

3. Procédé selon la revendication 2,
**caractérisé en ce qu'**
on utilise comme matériau de remplissage un corps en céramique dont la géométrie externe est ajustée à celle de la chambre médiane (28).

4. Procédé selon la revendication 2,
**caractérisé en ce qu'**
on utilise, comme limite de bain, des plaques de cuivre refroidies.

5. Procédé selon l'une quelconque des revendications précédentes,
**caractérisé en ce que**
les sections de rail sont soudées de préférence dans la zone des 400°C, après un préchauffage de 300 à 500°C.

6. Procédé selon l'une quelconque des revendications précédentes,
**caractérisé en ce qu'**
entre le matériau de remplissage et la plaque de refroidissement située vers la tête, on introduit au moins une, de préférence, deux électrodes ou plus, du genre à fil ou à ruban, et, entre le matériau de remplissage et la plaque de refroidissement située vers le pied, on introduit une électrode du genre à fil ou à ruban, amenant le courant, ou inversement.

7. Procédé selon l'une quelconque des revendications précédentes,
**caractérisé en ce que**
pour souder les sections de voie, on règle une capacité de soudage de 10 à 15 kg/h, de préférence 11 à 13 kg/h du matériau d'électrode à fil.

8. Procédé selon l'une quelconque des revendications précédentes,
**caractérisé en ce que**
l'électrode à fil est entourée par un corps de guidage conducteur de l'électricité qui est lui-même enveloppé par un corps isolant non conducteur, composé de poudre de laitier comprimée.

9. Procédé selon l'une quelconque des revendications précédentes,
**caractérisé en ce que**
les surfaces en regard qu'il s'agit de souder l'une à l'autre, des pieds de rail et des têtes de rail sont espacées d'une distance B comprise entre 10 et 50 mm, de préférence 20 à 30 mm.

10. Procédé selon l'une quelconque des revendications précédentes,
**caractérisé en ce que**
comme électrode à fil, on utilise en tant que conducteur électrique un corps cylindrique creux qui est rempli de poudre de laitier.

11. Procédé selon l'une quelconque des revendications précédentes,
**caractérisé en ce que**
les pieds de rail et les têtes de rail sont orientés de manière que les surfaces à souder sont parallèles ou à peu près parallèles entre elles.

12. Procédé selon l'une quelconque des revendications précédentes,
**caractérisé en ce que**
les pieds de rail et les têtes de rail sont orientés de manière que les surfaces à souder fassent entre elles un angle tel que 2° ≤ α ≤ 15°.

13. Procédé selon l'une quelconque des revendications précédentes,
**caractérisé en ce que**
pour souder les sections de rails, on règle le courant traversant l'électrode à fil correspondante entre 300 et 1200 A, de préférence 400 à 600 A.

14. Procédé selon l'une quelconque des revendications précédentes,
**caractérisé en ce qu'**
après réalisation des cordons de soudure, ceux situés vers le fond sont retirés à une distance de l'extrémité libre de la superstructure de voie de 10 à 30 mm, de préférence 20 mm.

15. Procédé selon l'une quelconque des revendications précédentes,
**caractérisé en ce qu'**
à son extrémité, le cordon de soudure est arrondi mécaniquement.

16. Procédé selon l'une quelconque des revendications précédentes,
**caractérisé en ce que**
la superstructure de voie est traitée à chaud, après formation du cordon de soudure.

17. Procédé selon l'une quelconque des revendications précédentes,
**caractérisé en ce que**
pendant le traitement à chaud, le matériau de remplissage demeure dans la chambre médiane.

18. Dispositif pour souder deux pièces allongées (10, 12) dans deux zones plates (20, 22, 24, 26) éloignées les unes des autres, en particulier pour souder deux sections de voie dont les têtes et les pieds de rail sont dirigés respectivement l'un vers l'autre afin d'être soudés,
**caractérisé en ce que**
le dispositif (60) conçu pour réaliser un soudage sous laitier comprend, pour fixer les pièces (10, 12, 62) un support (64) pouvant par basculement passer d'une position de montage des pièces à une position de soudage, verticale ou à peu près verticale, et le long du support, des deux côtés des pièces, dans les zones (20, 22, 24, 26) où celles-ci doivent être soudées, sont disposés des guides applicables extérieurement sur les pièces, ainsi que des corps creux de refroidissement pouvant être déplacés le long des guides et qui sont orientés, dans la zone de soudure, parallèlement ou à peu près parallèlement aux surfaces à souder.

19. Dispositif selon la revendication 18,
**caractérisé en ce que**
les guides (72, 74) des corps de refroidissement (34, 36) et/ou des logements (68) pour les électrodes du type à fil ou à ruban (48, 50, 52) partent d'autres supports.

20. Dispositif selon la revendication 18,
**caractérisé en ce qu'**
un des autres supports (72) constitue une unité avec le support (64), tel qu'une table de réception, assurant la fixation des pièces (10, 12, 62).

21. Dispositif selon la revendication 18,
**caractérisé en ce que**
les logements (68) des électrodes (48, 50, 52) sont des bobinages.

22. Dispositif selon la revendication 18,
**caractérisé en ce que**
des dispositifs d'amenée (70) de la poudre de soudage, telle que de la poudre de laitier partent des autres supports (72, 74).

23. Dispositif selon la revendication 18,
**caractérisé en ce que**
le dispositif d'amenée (70) constitue une unité avec le logement (68) pour l'électrode (48, 50, 52).
